# EUROPÄISCHE PATENTSCHRIFT

(11) **EP 3 066 417 B1**
(45) Veröffentlichungstag und Bekanntmachung des Hinweises auf die Patenterteilung: **19.07.2017**
(21) Anmeldenummer: 14781168.1
(22) Anmeldetag: 06.10.2014
(51) Int. Cl.: G01B 11/26, G01B 11/275

(54) **VORRICHTUNG UND VERFAHREN ZUM BESTIMMEN EINES DREHWINKELS EINES RADES**
DEVICE AND METHOD FOR DETERMINING A ROTATIONAL ANGLE OF A WHEEL
DISPOSITIF ET PROCÉDÉ DE DÉTERMINATION DE L'ANGLE DE ROTATION D'UNE ROUE

(30) Priorität: 06.11.2013 DE 102013222526
(43) Veröffentlichungstag der Anmeldung: 14.09.2016
(73) Patentinhaber: Robert Bosch GmbH, 70442 Stuttgart (DE)
(72) Erfinder: PAVLOV, Pavel, 81539 München (DE); HANNING, Tobias, 80993 München (DE); SIMON, Stephan, 31079 Sibbesse (DE); KRUEGER, Christof, 81379 München (DE)
(86) Internationale Anmeldenummer: PCT/EP2014/071279
(87) Internationale Veröffentlichungsnummer: WO 2015/067417

(56) Entgegenhaltungen:
- EP-A2- 1 092 967
- WO-A1-2005/090906
- DE-A1-102008 001 339

## Beschreibung

Die Erfindung betrifft eine Vorrichtung und ein Verfahren zum Bestimmen eines Drehwinkels eines Rades, insbesondere zum Bestimmen einer Änderung eines Nachlaufwinkels eines an einem Fahrzeug montierten Rades.

### Stand der Technik

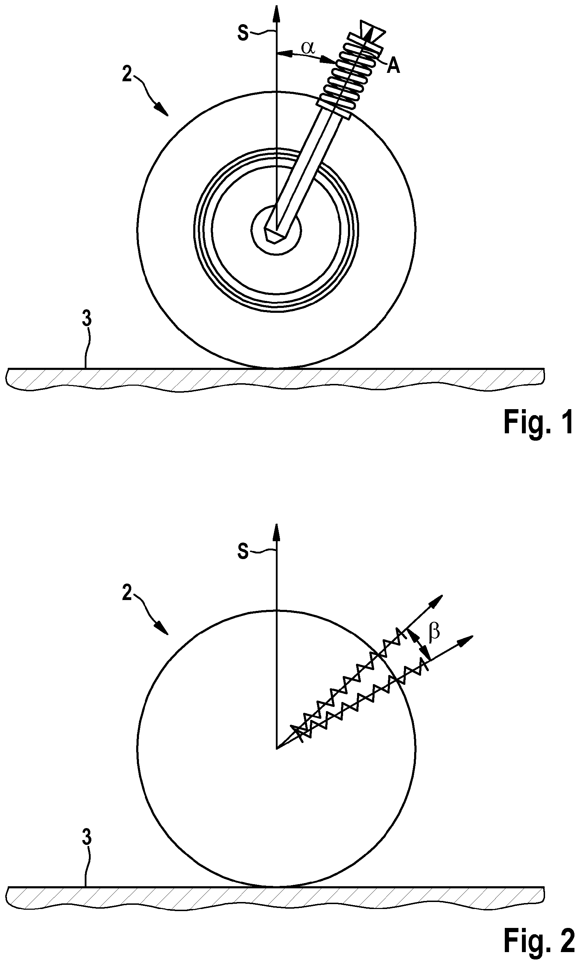

Als Nachlauf α eines Rades wird die Schrägstellung der Schwenkachse A in Richtung der Längsachse eines Fahrzeugs gegenüber einer senkrecht zur Fahrbahn 3 ausgerichteten Linie S bezeichnet (siehe Fig. 1). Der Nachlauf ist ein von den meisten Automobilherstellern innerhalb der Fahrachsvermessung vorgeschriebener Wert.

Zur Ermittlung des Nachlaufwertes α muss insbesondere die Ausrichtung der Schwenkachse A des Rades 2 in Bezug auf die Ebene der Fahrbahn 3 bestimmt werden. Dies geschieht bei der Achsvermessung in der Regel durch eine sogenannte Lenkeinschlagroutine. Dabei wird die Ausrichtung der Schwenkachse A indirekt aus Änderungen der Spur- und Sturzwerte bei verschiedenen Lenkeinstellungen ermittelt.

Üblicherweise werden in einer Lenkeinschlagroutine die Spur- und Sturzwerte des zu vermessenden Rades 2 bei verschiedenen Lenkeinschlägen, z.B. zwischen -20° und +20°, bestimmt. Ist eine Änderung des Nachlaufs erforderlich, so ist jede Änderung des Nachlaufwertes während der Einstellarbeiten anzuzeigen.

### Offenbarung der Erfindung

Es ist eine Aufgabe der Erfindung, eine Vorrichtung und ein Verfahren zur Verfügung zu stellen, die es ermöglichen, Änderungen des Nachlaufwertes schnell und einfach zu bestimmen, insbesondere ohne dazu eine aufwendige Lenkeinschlagroutine durchführen zu müssen.

Ist die Ausrichtung der Schwenkachse A einmal bekannt, kann eine Veränderung des Nachlaufwertes, insbesondere durch Einstellarbeiten, durch Bestimmen des Abrollwinkels β des Rades 2 bestimmt werden (siehe Fig. 2).

Dazu umfasst ein erfindungsgemäßes Verfahren die Schritte:
- Aufnehmen eines ersten Bildes, das wenigstens einen Bereich der Seitenwand des zu vermessenden Rades enthält;
- Extrahieren einer Abbildung wenigstens eines Bereichs der Seitenwand des Rades aus dem aufgenommenen ersten Bild;
- Drehen des Rades um seine Drehachse, insbesondere durch Einstellarbeiten, bei denen der Nachlauf verstellt wird;
- Aufnehmen eines zweiten Bildes, das wenigstens einen Bereich der Seitenwand des Rades enthält;
- Extrahieren einer Abbildung wenigstens eines Bereichs der Seitenwand des Rades aus dem aufgenommenen zweiten Bild; und
- Vergleichen der erstes Abbildung mit der zweiten Abbildung, um den sogenannten Dreh- bzw. Abrollwinkel zu bestimmen, um den das Rad zwischen der Aufnahme der beiden Bilder gedreht worden ist.

Ein solches Verfahren ist z.B. aus der WO 2005/090906 bekannt.

Aus dem auf diese Weise bestimmten Dreh- bzw. Abrollwinkel des Rades kann eine Veränderung des Nachlaufwinkels unmittelbar bestimmt werden. Auf die Abbildungen wird erfindungsgemäß eine Analyse des optischen Flusses, angewandt, um die Drehung des Rades zwischen dem Ausgangsbild und dem nach der Drehung des Rades aufgenommenen Bild zu bestimmen.

Eine erfindungsgemäße Vorrichtung umfasst eine Bildaufnahmevorrichtung, die ausgebildet ist, ein Bild aufzunehmen, das wenigstens einen Bereich der Seitenwand des Rades enthält; und eine Auswertevorrichtung, die ausgebildet ist, ein erfindungsgemäßes Verfahren durchzuführen.

Ein erfindungsgemäßes Verfahren gemäß Anspruch 1 und eine erfindungsgemäße Vorrichtung gemäß Anspruch 5 ermöglichen es, den Abrollwinkel und damit auch Änderungen des Nachlaufwinkels eines Rades, insbesondere eines Rades eine Kraftfahrzeugs, einfach, schnell und bequem mit einer berührungslosen Messung zu bestimmen.

In einer Ausführungsform umfasst das Vergleichen der ersten Abbildung mit der zweiten Abbildung, ein charakteristisches Merkmal zu identifizieren, das in den beiden Abbildungen vorhanden ist, und eine Veränderung der Position des charakteristischen Merkmals zu bestimmen. Durch Auswerten der Bewegung eines charakteristischen Merkmals, wie beispielsweise eines Ventils oder einer anderen markanten Stelle des Rades, kann der Abrollwinkel des Rades auf einfache Weise zuverlässig bestimmt werden.

In einer Ausführungsform umfasst das erfindungsgemäße Verfahren zusätzlich die Schritte:
- Definieren eines Polarkoordinatensystems des Rades, wobei die Drehachse des Rades das Zentrum des Polarkoordinatensystems definiert;
- Transformieren der aus dem ersten Bild extrahierten Bilddaten in das Polarkoordinatensystem des Rades, um ein erstes Polarkoordinatenbild zu erzeugen;
- Transformieren der aus dem zweiten Bild extrahierten Bilddaten in das Polarkoordinatensystem des Rades, um ein zweites Polarkoordinatenbild zu erzeugen;
und der Schritt des Vergleichens der ersten Abbildung mit der zweiten Abbildung umfasst, das erste Polarkoordinatenbild mit dem zweiten Polarkoordinatenbild zu vergleichen.

Durch die Transformation der aufgenommenen Bilder in Polarkoordinaten, die auch "Abrollen" genannt wird, wird ein Bild erzeugt, in dem eine Drehung des Rades einer linearen Bewegung entlang einer Komponente (Dimension) des abgerollten Bildes entspricht. Da eine Rotation des Rades in der realen Welt einer Translation im so transformierten ("abgerollten") Bild entspricht, wird das Vergleichen der beiden Bilder zur Bestimmung des Raddrehwinkels und damit auch einer Änderung des Nachlaufwinkels erheblich vereinfacht. Der Abrollwinkel des Rades kann so auf einfache Weise aus der Translation im transformierten Bild bestimmt werden.

Erfindungsgemäß umfasst das Vergleichen des erstes Polarkoordinatenbildes mit dem zweiten Polarkoordinatenbild, den optischen Fluss zwischen den beiden Bildern zu bestimmen, um die Translation im Polarkoordinatenbild und damit den Abrollwinkel des Rades zu bestimmen. Der optische Fluss zwischen zwei Bildern kann mit bekannten Verfahren der Bildanalyse einfach und zuverlässig bestimmt werden.

Als optischer Fluss wird in der Bildverarbeitung und in der optischen Messtechnik ein Vektorfeld bezeichnet, das die Bewegungsrichtung und Geschwindigkeit für jeden Bildpunkt einer Bildsequenz angibt.

Die zur Durchführung des Verfahrens notwendigen Bilder können mit einer Mono-Kamera oder einem Stereo-Kamerasystem aufgenommen werden. Eine Mono-Kamera ist einfach und kostengünstig; ein Stereo-Kamerasystem liefert zusätzliche Tiefeninformationen, die bei der Auswertung der aufgenommenen Bilder berücksichtigt werden können.

Eine erfindungsgemäße Vorrichtung kann eine Anzeigevorrichtung aufweisen, die es ermöglicht, ein aufgenommenes Bild, ein in Polarkoordinaten transformiertes Bild und/oder den erfindungsgemäß bestimmten Raddrehwinkel anzuzeigen. Auf diese Weise kann der erfindungsgemäß bestimmte Drehwinkel des Rades auf einfache Weise unmittelbar an der Vorrichtung abgelesen werden. Durch die Anzeige des aufgenommenen Bildes und/oder des in Polarkoordinaten transformierten ("abgerollten") Bildes kann die Durchführung des Verfahrens überwacht werden; insbesondere kann der angezeigte Wert des Raddrehwinkels auf Plausibilität überprüft werden.

Die Vorrichtung kann zwei oder vier Bildaufnahmevorrichtungen umfassen, die es ermöglichen, gleichzeitig Bilder von den Rädern einer Achse und/oder aller Räder des Fahrzeugs aufzunehmen, um Änderungen des Drehwinkels und ggf. des Nachlaufwinkels gleichzeitig für alle Räder einer Achse oder des Fahrzeugs vornehmen zu können.

Die Vorrichtung kann auch wenigstens eine Beleuchtungsvorrichtung umfassen, die ausgebildet ist, wenigstens ein Rad zu beleuchten, so dass die Bildaufnahmen jederzeit und insbesondere unabhängig von den natürlichen Lichtverhältnissen durchgeführt werden können.

### Kurze Beschreibung der Figuren:

Fig. 1 zeigt eine seitliche Ansicht eines Rades, das am Ende einer Schwenkachse eines Fahrzeugs angebracht ist.
Fig. 2 zeigt eine seitliche schematische Ansicht des Rades aus Fig. 1, das um einen Abroll- bzw. Drehwinkel β gedreht worden ist.
Fig. 3 zeigt eine schematische Draufsicht auf einen erfindungsgemäßen Messplatz zur Fahrzeugvermessung mit einem schematisch dargestellten Fahrwerk eines Fahrzeugs.
Fig. 4a zeigt schematisch ein von einer der Messvorrichtungen aufgenommenes Bild der Seitenfläche eines Rades.
Fig. 4b zeigt das Bild aus Fig. 4a nach einer Transformation in die Polarkoordinaten des Rades.

### Figurenbeschreibung:

Fig. 1 zeigt eine seitliche Ansicht eines Rades 2, das am Ende einer Schwenkachse A angebracht ist. Die Schwenkachse A ist gegenüber einer Senkrechten S, die senkrecht zur Ebene 3 der Fahrbahn ausgerichtet ist, um den sogenannten Nachlaufwinkel α geneigt.

Fig. 2 zeigt eine seitliche schematische Ansicht des Rades 2, das um einen Abrollwinkel β gedreht worden ist. Bei einem stehendem Fahrzeug führt eine Änderung des Nachlaufwinkels α zu einem Abrollen um den Winkel β, so dass aus einem bekannten Abrollwinkel β unmittelbar die Änderung des Nachlaufwinkels α bestimmt werden kann.

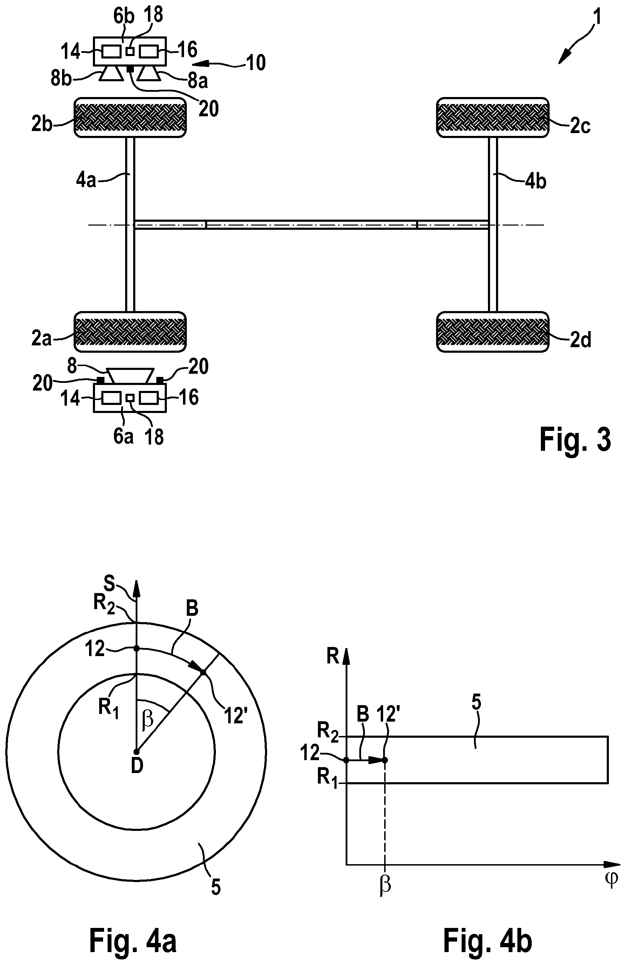

Fig. 3 zeigt eine schematische Draufsicht auf einen erfindungsgemäßen Messplatz 1 zur Fahrzeugvermessung mit einem schematisch dargestellten Fahrwerk eines Fahrzeugs. Das Fahrwerk weist eine vordere Achse 4a und eine hintere Achse 4b auf. An jeder der beiden Achsen 4a, 4b sind jeweils zwei Räder 2a-2d angebracht.

Eine erste erfindungsgemäße Messvorrichtung 6a ist dem linken Vorderrad 2a des Fahrzeugs gegenüberliegend angeordnet. Die Messvorrichtung 6a weist eine Bildaufnahmevorrichtung 8 auf, die ausgebildet und ausgerichtet ist, ein Bild der äußeren Seitenflanke des Rades 2a des Fahrzeugs aufzunehmen.

Dem rechten Vorderrad 2b des Fahrzeugs gegenüberliegend ist eine zweite Messvorrichtung 6b angeordnet. Die zweite Messvorrichtung 6b ist in einer alternativen Ausführungsform mit einem Stereo-Kamerasystem 10, das zwei Bildaufnahmevorrichtungen 8a, 8b aufweist, ausgebildet. Die alternative Ausführungsform der zweiten Messvorrichtung 6b ermöglicht es, Stereo-Bilder der Flanke des Rades 2b aufzunehmen, die zusätzliche Tiefeninformationen des Rades enthalten.

Zusätzliche, in der Figur 3 nicht gezeigte, Messvorrichtungen 6a, 6b können auch den Hinterrädern 2c, 2d des Fahrzeugs gegenüberliegend angeordnet sein, um deren Drehwinkel bzw. Änderungen der Nachlaufwerte zu bestimmen, ohne die Messvorrichtungen 6a, 6b versetzen zu müssen.

Die Messvorrichtungen 6a, 6b weisen jeweils eine Auswertevorrichtung 18, eine Anzeigevorrichtung 14 und/oder eine elektronische Schnittstelle 16 auf, die für eine drahtlose und/oder eine drahtgebundene Verbindung ausgebildet sein kann, um die von der jeweiligen Messvorrichtung 6a, 6b bestimmten Messwerte anzeigen und/oder ausgeben zu können.

Die Messvorrichtungen 6a, 6b können auch jeweils wenigstens eine Beleuchtungsvorrichtung 20 aufweisen, um das zu vermessende Rad 2 geeignet und ausreichend zu beleuchten und die Messung unabhängig von den Lichtverhältnissen der Umgebung durchführen zu können.

Die Messvorrichtungen 6a, 6b können über eine nicht gezeigte Kabelverbindung mit elektrischer Energie versorgt werden und/oder als mobile Messvorrichtungen 6a, 6b mit einer eigenen Stromversorgung (Akku, Batterie) ausgestattet sein.

Fig. 4a zeigt schematisch ein von einer der Messvorrichtungen 6a, 6b aufgenommenes Bild der Seitenfläche eines Rades 2, insbesondere eines Reifens 5 des Rades 2.

Das Rad 2 bzw. der Reifen 5 können insbesondere ein charakteristisches Merkmal 12, wie beispielsweise ein Ventil oder eine charakteristische Beschriftung aufweisen, das es ermöglicht, die Orientierung des Rades 2 in Bezug auf die Senkrechte S exakt zu bestimmen.

In der in der Fig. 4a gezeigten Darstellung bewirkt eine Drehung des Rades 2 um einen Abrollwinkel β eine Bewegung des charakteristischen Merkmals 12 entlang eines Kreisbogens B, der um die Drehachse D des Rades 2 zentriert ist. Durch Auswerten dieses von dem charakteristischen Merkmal 12 beschriebenen Kreisbogens B kann der Abrollwinkel β bestimmt werden. Dazu wird erfindungsgemäß die Methode des optischen Flusses, angewandt. Fig. 4b zeigt eine Darstellung der Seitenfläche des Rades 2, insbesondere des Reifens 5, die "abgerollt", d.h. in Polarkoordinaten (R,ϕ) transformiert ist. Dabei entspricht die horizontale (X-)Achse der Darstellung der Fig. 4b dem Winkel ϕ entlang des Umfangs um die Drehachse D des Rades 2 und die vertikale (Y-)Achse entspricht dem radialen Abstand R von der Drehachse D des Rades 2.

Der Kreisbogen B, der die Bewegungstrajektorie des charakteristischen Merkmals 12 beschreibt, wird in der Polarkoordinatendarstellung der Fig. 4b zu einer geraden Linie B, deren Länge mit üblichen Verfahren der Bildverarbeitung und/oder -auswertung besonders einfach und zuverlässig bestimmbar ist, so dass der Abrollwinkel β und in der Folge auch Änderungen des Nachlaufwinkels α des Rades 2 auf diese Weise einfach, zuverlässig und schnell bestimmt werden können.

## Patentansprüche

1. Verfahren zum Bestimmen eines Abrollwinkels (β) eines Rades (2), insbesondere eines Rades (2) eine Fahrzeugs, um seine Achse (D), wobei das Verfahren die Schritte umfasst:
- Aufnehmen eines ersten Bildes, das wenigstens einen Bereich einer Seitenwand des Rades (2) umfasst;
- Extrahieren einer ersten Abbildung der Seitenwand des Rades (2) aus dem aufgenommenen ersten Bild;
- Drehen des Rades (2) um die Achse (D);
- Aufnehmen eines zweiten Bildes, das wenigstens einen Bereich der Seitenwand des Rades (2) umfasst;
- Extrahieren einer zweiten Abbildung der Seitenwand des Rades (2) aus dem aufgenommenen zweiten Bild; und
- Vergleichen der ersten Abbildung mit der zweiten Abbildung, um aus dem Unterschied zwischen der ersten Abbildung und der zweiten Abbildung den Winkel zu bestimmen, um den das Rad (2) zwischen der Aufnahme der beiden Bilder gedreht worden ist
**dadurch gekennzeichnet, dass** das Vergleichen der ersten Abbildung mit der zweiten Abbildung umfasst, den optischen Fluss zwischen der beiden Abbildungen zu bestimmen, wobei der optische Fluss ein Vektorfeld bezeichnet, das die Bewegungsrichtung und Geschwindigkeit für jeden Bildpunkt einer Bildsequenz angibt.

2. Verfahren nach Anspruch 1 , wobei das Vergleichen der ersten Abbildung mit der zweiten Abbildung umfasst, ein charakteristisches Merkmal (12) in den beiden Abbildungen zu identifizieren und eine Veränderung der Position des charakteristischen Merkmals (12) zu bestimmen.

3. Verfahren nach einem der vorangehenden Ansprüche, wobei das Verfahren zusätzlich die Schritte:
- Definieren eines Polarkoordinatensystems (R,ϕ) des Rades (2), in dem die Achse (D) des Rades (2) das Zentrum des Polarkoordinatensystems (R,ϕ) bildet;
- Erzeugen eines ersten Polarkoordinatenbildes durch Transformieren der aus dem ersten Bild extrahierten Bilddaten in das Polarkoordinatensystem (R,ϕ) des Rades (2);
- Erzeugen eines zweiten Polarkoordinatenbildes durch Transformieren der aus dem zweiten Bild extrahierten Bilddaten in das Polarkoordinatensystem (R,ϕ) des Rades (2);
umfasst, und wobei der Schritt des Vergleichens der ersten Abbildung mit der zweiten Abbildung umfasst, das erste Polarkoordinatenbild mit dem zweiten Polarkoordinatenbild zu vergleichen, um den Abrollwinkel (β) des Rades (2) zu bestimmen.

4. Verfahren zum Bestimmen einer Änderung des Nachlaufwertes eines Rades (2), wobei das Verfahren umfasst, den Nachlaufwert (α) des Rades (2) zu verändern und mit einem Verfahren nach einem der vorangehenden Ansprüche eine durch die Veränderung des Nachlaufwertes (α) auftretende Veränderung des Abrollwinkels (β) des Rades (2) zu bestimmen.

5. Vorrichtung (6a, 6b) zur Bestimmung des Abrollwinkels (β) eines Rades (2) mit
- einer Bildaufnahmevorrichtung (8, 10), die ausgebildet ist, Bilder aufzunehmen, die wenigstens einen Bereich der Seitenwand des Rades (2) enthalten;
- einer Auswertevorrichtung (18), die ausgebildet ist:
aus den aufgenommenen Bildern Abbildungen einer Seitenwand des Rades (2) zu extrahieren; und
wenigstens zwei Abbildungen eines Rades (2) miteinander zu vergleichen, um den Abrollwinkel (β), um den das Rad (2) zwischen der Aufnahme der beiden Bilder, aus denen die Abbildungen extrahiert worden sind, gedreht worden ist, zu bestimmen,
**dadurch gekennzeichnet, dass** das Vergleichen der zwei Abbildungen eines Rades (2) umfasst, den optischen Fluss zwischen den beiden Abbildungen zu bestimmen, wobei der optische Fluss ein Vektorfeld bezeichnet, das die Bewegungsrichtung und Geschwindigkeit für jeden Bildpunkt einer Bildsequenz angibt.

6. Vorrichtung (6a, 6b) nach Anspruch 5, wobei die Vorrichtung (6a, 6b) zusätzlich ausgebildet ist
ein Polarkoordinatensystems (R,ϕ) des Rades (2) zu definieren, in dem die Achse (D) des Rades (2) das Zentrum des Polarkoordinatensystems (R,ϕ) bildet;
die Abbildungen der Seitenwand des Rades (2) in das Polarkoordinatensystem (R,ϕ) des Rades (2) zu transformieren, um Polarkoordinatenbilder (R,ϕ) des Rades (2) zu erzeugen; und
die Polarkoordinatenbilder (R,ϕ) des Rades (2) miteinander zu vergleichen.

7. Vorrichtung (6a, 6b) nach Anspruch 5 oder 6, wobei die Vorrichtung (6a, 6b) eine Anzeigevorrichtung (14) aufweist, die ausgebildet ist, ein aufgenommenes Bild, ein in Polarkoordinaten (R,ϕ) transformiertes Bild und/oder den Abrollwinkel (β), um den das Rad (2) zwischen der Aufnahme der beiden Bilder gedreht worden ist, anzuzeigen.

8. Vorrichtung (6a, 6b) nach einem der Ansprüche 5 bis 7, wobei die Vorrichtung (6b) zwei oder vier Bildaufnahmevorrichtungen (8, 10) umfasst, wobei jede Bildaufnahmevorrichtung (8, 10) insbesondere jeweils einem Rad (2) eines Fahrzeugs zugeordnet ist.

9. Vorrichtung (6a, 6b) nach einem der Ansprüche 5 bis 8, wobei die Vorrichtung (6a, 6b) wenigstens eine Beleuchtungsvorrichtung (20) umfasst, die ausgebildet ist, wenigstens ein Rad (2) zu beleuchten.

## Claims

1. Method for determining a roll angle (β) of a wheel (2), in particular of a wheel (2) of a vehicle, about the axis (D) thereof, wherein the method comprises the following steps:
- recording a first image comprising at least one region of a side wall of the wheel (2);
- extracting a first imaging of the side wall of the wheel (2) from the recorded first image;
- rotating the wheel (2) about the axis (D);
- recording a second image comprising at least one region of the side wall of the wheel (2);
- extracting a second imaging of the side wall of the wheel (2) from the recorded second image; and
- comparing the first imaging with the second imaging in order to determine, from the difference between the first imaging and the second imaging, the angle by which the wheel (2) was rotated between the recording of the two images,
**characterized in that** comparing the first imaging with the second imaging comprises determining the optical flow between the two imagings, wherein the optical flow denotes a vector field indicating the direction of movement and velocity for each image point of an image sequence.

2. Method according to Claim 1, wherein comparing the first imaging with the second imaging comprises identifying a characteristic feature (12) in the two imagings and determining an alteration of the position of the characteristic feature (12).

3. Method according to either of the preceding claims, wherein the method additionally comprises the following steps:
- defining a polar co-ordinate system (R, ϕ) of the wheel (2), in which the axis (D) of the wheel (2) forms the centre of the polar co-ordinate system (R, ϕ);
- generating a first polar co-ordinate image by transforming the image data extracted from the first image into the polar co-ordinate system (R, ϕ) of the wheel (2);
- generating a second polar co-ordinate image by transforming the image data extracted from the second image into the polar co-ordinate system (R, ϕ) of the wheel (2);
and wherein the step of comparing the first imaging with the second imaging comprises comparing the first polar co-ordinate image with the second polar co-ordinate image in order to determine the roll angle (β) of the wheel (2).

4. Method for determining a change in the caster value of a wheel (2), wherein the method comprises altering the caster value (α) of the wheel (2) and, by means of a method according to any of the preceding claims, determining an alteration of the roll angle (β) of the wheel (2) that occurs as a result of the alteration of the caster value (α).

5. Device (6a, 6b) for determining the roll angle (β) of a wheel (2) comprising
- an image recording device (8, 10), which is designed to record images which contain at least one region of the side wall of the wheel (2);
- an evaluation device (18), which is designed:
to extract from the recorded images imaging of a side wall of the wheel (2); and
to compare at least two imagings of a wheel (2) with one another in order to determine the roll angle (β) by which the wheel (2) was rotated between the recording of the two images from which the imagings were extracted,
**characterized in that** comparing the two imagings of a wheel (2) comprises determining the optical flow between the two imagings, wherein the optical flow denotes a vector field indicating the direction of movement and velocity for each image point of an image sequence.

6. Device (6a, 6b) according to Claim 5, wherein the device (6a, 6b) is additionally designed
to define a polar co-ordinate system (R, ϕ) of the wheel (2), in which the axis (D) of the wheel (2) forms the centre of the polar co-ordinate system (R, ϕ);
to transform the imagings of the side wall of the wheel (2) into the polar co-ordinate system (R, ϕ) of the wheel (2) in order to generate polar co-ordinate images (R, ϕ) of the wheel (2); and
to compare the polar co-ordinate images (R, ϕ) of the wheel (2) with one another.

7. Device (6a, 6b) according to Claim 5 or 6, wherein the device (6a, 6b) has a display device (14), which is designed to display a recorded image, an image transformed into polar co-ordinates (R, ϕ) and/or the roll angle (β) by which the wheel (2) was rotated between the recording of the two images.

8. Device (6a, 6b) according to any of Claims 5 to 7, wherein the device (6b) comprises two or four image recording devices (8, 10), wherein each image recording device (8, 10) is assigned in particular respectively to a wheel (2) of a vehicle.

9. Device (6a, 6b) according to any of Claims 5 to 8, wherein the device (6a, 6b) comprises at least one illumination device (20) designed to illuminate at least one wheel (2).

## Revendications

1. Procédé de détermination d'un angle de déroulement (ß) d'une roue (2), notamment d'une roue (2) d'un véhicule, autour de son axe (D), le procédé comprenant les étapes suivantes :
- capture d'une première image qui comprend au moins une zone d'une paroi latérale de la roue (2) ;
- extraction d'une première représentation de la paroi latérale de la roue (2) à partir de la première image capturée ;
- rotation de la roue (2) autour de l'axe (D) ;
- capture d'une deuxième image qui comprend au moins une zone de la paroi latérale de la roue (2) ;
- extraction d'une deuxième représentation de la paroi latérale de la roue (2) à partir de la deuxième image capturée ; et
- comparaison de la première représentation avec la deuxième représentation afin de déterminer, à partir de la différence entre la première représentation et la deuxième représentation, l'angle selon lequel la roue (2) a tourné entre la capture des deux images,
**caractérisé en ce que** la comparaison de la première représentation avec la deuxième représentation comprend la détermination du flux optique entre les deux représentations, le flux optique désignant un champ vectoriel qui indique le sens du mouvement et la vitesse pour chaque pixel d'une séquence d'images.

2. Procédé selon la revendication 1, la comparaison de la première représentation avec la deuxième représentation comprenant l'identification d'une caractéristique (12) caractérisante dans les deux représentations et la détermination d'une modification de la position de la caractéristique (12) caractérisante.

3. Procédé selon l'une des revendications précédentes, le procédé comprenant en outre les étapes suivantes :
- définition d'un système de coordonnées polaires (R, ϕ) de la roue (2) dans lequel l'axe (D) de la roue (2) forme le centre du système de coordonnées polaires (R, ϕ) ;
- génération d'une première image aux coordonnées polaires par transformation des données d'images extraites de la première image dans le système de coordonnées polaires (R, ϕ) de la roue (2) ;
- génération d'une deuxième image aux coordonnées polaires par transformation des données d'images extraites de la deuxième image dans le système de coordonnées polaires (R, ϕ) de la roue (2) ;
et l'étape de comparaison de la première représentation avec la deuxième représentation comprenant la comparaison de la première image aux coordonnées polaires avec la deuxième image aux coordonnées polaires afin de déterminer l'angle de déroulement (ß) de la roue (2).

4. Procédé de détermination d'une modification de la valeur de chasse d'une roue (2), le procédé comprenant la modification de la valeur de chasse (α) de la roue (2) et la détermination, avec un procédé selon l'une des revendications précédentes, d'une modification de l'angle de déroulement (ß) de la roue (2) provoquée par la modification de la valeur de chasse (α).

5. Dispositif (6a, 6b) pour déterminer l'angle de déroulement (ß) d'une roue (2), comprenant
- un dispositif de capture d'images (8, 10) qui est configuré pour capturer des images qui contiennent au moins une zone de la paroi latérale de la roue (2) ;
- un dispositif d'interprétation (18) qui est configuré pour :
extraire des représentations d'une paroi latérale de la roue (2) à partir des images capturées ; et
comparer entre elles au moins deux représentations d'une roue (2) afin de déterminer l'angle de déroulement (ß) selon lequel la roue (2) a tourné entre la capture des deux images à partir desquelles ont été extraites les représentations,
**caractérisé en ce que** la comparaison des deux représentations d'une roue (2) comprend la détermination du flux optique entre les deux représentations, le flux optique désignant un champ vectoriel qui indique le sens du mouvement et la vitesse pour chaque pixel d'une séquence d'images.

6. Dispositif (6a, 6b) selon la revendication 5, le dispositif (6a, 6b) étant en outre configuré pour
définir un système de coordonnées polaires (R, ϕ) de la roue (2) dans lequel l'axe (D) de la roue (2) forme le centre du système de coordonnées polaires (R, ϕ) ;
transformer les représentations de la paroi latérale de la roue (2) dans le système de coordonnées polaires (R, ϕ) afin de générer des images aux coordonnées polaires (R, ϕ) de la roue (2) ; et
comparer entre elles les images aux coordonnées polaires (R, ϕ) de la roue (2).

7. Dispositif (6a, 6b) selon la revendication 5 ou 6, le dispositif (6a, 6b) possédant un dispositif d'affichage (14) qui est configuré pour afficher une image capturée, une image transformée dans le système de coordonnées polaires (R, ϕ) et/ou l'angle de déroulement (ß) selon lequel la roue (2) a tourné entre la capture des deux images.

8. Dispositif (6a, 6b) selon l'une des revendications 5 à 7, le dispositif (6b) comprenant deux ou quatre dispositifs de capture d'images (8, 10), chaque dispositif de capture d'images (8, 10) étant notamment respectivement associé à une roue (2) d'un véhicule.

9. Dispositif (6a, 6b) selon l'une des revendications 5 à 8, le dispositif (6a, 6b) comprenant au moins un dispositif d'éclairage (20) qui est configuré pour éclairer au moins une roue (2).
